# DEMANDE DE BREVET EUROPEEN

(11) **EP 4 628 430 A1**
(43) Date de publication de la demande: **08.10.2025**
(21) Numéro de dépôt: 25167048.5
(22) Date de dépôt: 28.03.2025
(51) Int. Cl.: B65G 1/04

(54) **ENSEMBLE POUR SYSTÈME AUTOMATISÉ DE STOCKAGE ET DE RÉCUPÉRATION**

(30) Priorité: 05.04.2024 FR 2403540
(71) Demandeur: Exotec Product France, 59170 Croix (FR)
(72) Inventeur: ROELS, PIERRE, 59160 LOMME (FR)
(74) Mandataire: Plasseraud IP

(57) **Abrégé**

Ensemble comprenant :
- au moins un montant (20) s'étendant selon une première direction (Z) et comprenant une crémaillère (22) qui comporte des premières dents (24) ;
- au moins un moyen de grimpe (110) comprenant une roue dentée (112) qui comprend, à sa périphérie, des deuxièmes dents (114) adaptées pour engrener avec les premières dents (24) de la crémaillère (22),
ledit au moins un montant (20) et ledit au moins un moyen de grimpe (110) comprenant des premiers moyens de guidage (34 ; 121) configurés pour coopérer l'un avec l'autre lors d'un déplacement d'engagement (DE) du moyen de grimpe (110) vers le montant (20) afin de guider la roue dentée (112) du moyen de grimpe (110) selon la première direction (Z) jusque dans une position engagée (PE).

## Description

### Domaine technique

La présente description se rapporte à un ensemble comprenant une roue dentée d'un moyen de grimpe pour véhicule et une crémaillère d'un montant de rack de stockage. La présente description se rapporte également un véhicule comprenant un tel moyen de grimpe et un rack de stockage comprenant un tel montant.

### Technique antérieure

Dans le domaine de la logistique, il est connu de disposer des racks de stockage dans des entrepôts. Un rack de stockage dans un entrepôt comprend classiquement une structure verticale, formée par un ensemble de montants verticaux, bien souvent sous forme de profilés métalliques verticaux.

Dans les entrepôts, ces racks de stockage sont destinés à accueillir et stocker des articles, lesdits articles étant ensuite réunis pour constituer des commandes ; ces commandes sont par la suite envoyées à un client final au moyen de transport routier, ferroviaire ou de toute autre nature, ou sorties de l'entrepôt pour être perçues directement par le client final au niveau d'un "drive".

Au sein même de leur structure, les racks de stockage définissent des emplacements de stockage, encore appelés alvéoles. Ces alvéoles sont destinées à recevoir des bacs ou plus généralement des réceptacles, dans lesquels sont placés et stockés des articles. À cet effet, des couples d'interfaces mécaniques, typiquement sous forme d'équerres, sont solidarisés aux montants, pour assurer le centrage et le soutien des différentes charges au niveau des différentes alvéoles.

De tels racks de stockage peuvent être desservis par un système de transport comprenant des véhicules à guidage automatique configurés pour saisir et déposer des articles dans lesdits racks de stockage. De tels systèmes de stockage portent le nom de ASRS selon l'acronyme anglo-saxon « Automated Storage and Retrieval System » (en Français, « système automatisé de stockage et de récupération »). Les véhicules à guidage automatique ci-après désignés par leur abréviation AGV selon l'expression en langue anglaise « Automatic guided vehicle » sont des robots qui se déplacent de façon autonome sans l'intervention humaine.

Les AGV peuvent se déplacer suivant au moins une direction, voire les deux directions d'une surface horizontale qui peut être typiquement le sol de l'entrepôt. Les véhicules à guidage automatique peuvent aussi se déplacer verticalement sur les racks de stockage. De tels systèmes de stockage sont notamment divulgués par le document WO 2019/072432. Comme divulgué par ce document WO 2019/072432 des véhicules à guidage automatique sont configurés pour prélever des réceptacles de produits ou articles soutenus par les équerres dans les racks de stockage, et les transporter jusqu'à un autre emplacement typiquement un autre emplacement de stockage ou à un poste de préparation de commande où lesdits articles sont réunis, typiquement de manière à constituer une commande pour un client final.

Pour ce faire, le châssis du véhicule à guidage automatique présente typiquement un dispositif de préhension comprenant un support mobile par rapport au châssis qui est configuré pour passer d'une position escamotée de chargement d'un réceptacle (typiquement un bac) sur le châssis du véhicule dans laquelle le support est typiquement logé sur le châssis, et jusqu'à une position déployée de déchargement dans laquelle le support mobile s'étend en porte à faux du châssis pour décharger/déposer le réceptacle, typiquement sur l'un des couples d'équerres du rack de stockage.

Comme divulgué par WO 2019/072432, lesdits AGV peuvent présenter un châssis équipé de moyens de grimpe. Typiquement, ces moyens comprennent des roues dentées motorisées du véhicule qui sont configurées pour s'engrener avec les maillons d'une chaîne à rouleaux sensiblement tendue, ou encore avec les dents d'une barre de crémaillère s'étendant le long des montants des racks de stockage.

Ainsi, les AGV disposent de moyens de locomotion et d'orientation, les rendant capables de se déplacer en trois dimensions. Aux deux dimensions planes associées généralement au sol sur lequel se déplacent les AGV, s'ajoute une troisième dimension verticale associée aux racks de stockage sur lesquels les AGV sont capables de monter et de descendre.

L'un des principaux défis de la conception de ces AGV est d'assurer une interaction cohérente et fiable avec les montants, ce qui est important pour le déplacement vertical des AGV. Les variations dans l'alignement des montants, combinées aux tolérances de la planéité du sol et de fabrication des EGV, peuvent entraîner des difficultés d'engrènement des moyens de grimpe. Ces difficultés sont encore aggravées par l'absence de contrôle en temps réel de l'orientation du mécanisme d'engagement pendant le processus d'engrènement. De telles conditions peuvent conduire à un mauvais alignement et à des risques d'accident.

Le document EP-3992115 A1 décrit un véhicule de type navette se déplaçant horizontalement le long de rails dans un rack. Le véhicule comprend notamment un moyen de grimpe déployable pour déplacer le véhicule verticalement dans le rack le long d'une crémaillère agencée sur une première surface d'un montant. Le moyen de grimpe comprend notamment une roue dentée configurée pour s'engrener dans les dents de la crémaillère, et une roue de pression configurée pour être en appui sur une deuxième surface du montant faisant face à la crémaillère, afin de guider le véhicule lors de son déplacement vertical. Le moyen de grimpe comprend également un mécanisme de pivotement permettant, lorsque le moyen de grimpe est déployé, de faire pivoter la roue dentée et la roue de pression entre une position dégagée dans laquelle la roue dentée et la roue de pression ne sont en contact ni avec la crémaillère, ni avec la deuxième surface du montant, respectivement, et une position engagée dans laquelle la roue dentée et la roue de pression sont en contact avec la crémaillère et la deuxième surface du montant, respectivement. Ce mécanisme de pivotement ne permet cependant pas d'assurer l'engrènement de la roue dentée dans les dents de la crémaillère.

### Résumé

Il est proposé un ensemble comprenant :
- au moins un montant pour rack de stockage s'étendant selon une première direction, le montant comprenant une crémaillère qui comporte des premières dents saillantes selon une deuxième direction perpendiculaire à la première direction ;
- au moins un moyen de grimpe pour un véhicule apte à se déplacer le long dudit montant selon la première direction, le moyen de grimpe comprenant une roue dentée qui présente un axe de rotation et qui comprend, à sa périphérie, des deuxièmes dents saillantes radialement par rapport à l'axe de rotation, les deuxièmes dents de la roue dentée étant adaptées pour engrener avec les premières dents de la crémaillère,
caractérisé en ce que ledit au moins un montant et ledit au moins un moyen de grimpe comprennent des premiers moyens de guidage associés configurés pour coopérer l'un avec l'autre lors d'un déplacement d'engagement du moyen de grimpe vers le montant au moins selon la deuxième direction, afin de guider la roue dentée du moyen de grimpe selon la première direction jusque dans une position engagée dans laquelle les deuxièmes dents de la roue dentée engrènent avec les premières dents de la crémaillère, l'axe de rotation de la roue dentée s'étendant selon une troisième direction perpendiculaire à la première direction et à la deuxième direction dans la position engagée.

La première direction peut coïncider avec la direction verticale. La deuxième direction et la troisième direction peuvent coïncider avec des directions horizontales.

Les premiers moyens de guidage du montant et du moyen de grimpe peuvent être configurés pour coopérer par complémentarité de forme.

Les premiers moyens de guidage du montant peuvent comprendre une première face de guidage s'étendant selon la deuxième direction, en tout ou partie, de manière inclinée au moins selon la première direction. Les premiers moyens de guidage comprennent un premier organe d'appui, le premier organe d'appui étant configuré pour se déplacer le long de la première face de guidage entre une position initiale et une position finale lors du déplacement d'engagement du moyen de grimpe. La position finale du premier organe d'appui sur la première face d'appui est déterminée pour coïncider avec la position engagée de la roue dentée.

La roue dentée et le premier organe d'appui peuvent être fixes l'un par rapport à l'autre au moins selon la première direction.

Le premier organe d'appui peut comprendre un galet configuré pour rouler le long de la première surface de guidage lors du déplacement d'engagement du moyen de grimpe.

Le moyen de grimpe peut comprendre un support, la roue dentée étant montée pivotante sur le support autour de l'axe de rotation et le premier organe d'appui étant monté sur le support.

Le galet peut être monté pivotant sur le support autour d'un premier axe.

Le montant peut comprendre un support agencé au niveau d'une extrémité de la crémaillère, le support comprenant au moins une paroi latérale qui s'étend selon la deuxième direction, ladite paroi latérale comprenant la première face de guidage.

Ledit au moins un montant et ledit au moins un moyen de grimpe peuvent comprendre des seconds moyens de guidage associés configurés pour coopérer l'un avec l'autre lors du déplacement d'engagement du moyen de grimpe, afin de guider la roue dentée du moyen de grimpe au moins selon la troisième direction jusque dans la position engagée.

Les seconds moyens de guidage du montant peuvent comprendre au moins une deuxième face de guidage s'étendant selon la deuxième direction, en tout ou partie, de manière inclinée au moins selon la troisième direction. Les seconds moyens de guidage du moyen de grimpe peuvent comprendre au moins un deuxième organe d'appui, le deuxième organe d'appui étant configuré pour se déplacer le long de la deuxième face de guidage entre une position initiale et une position finale lors du déplacement d'engagement du moyen de grimpe. La position finale du deuxième organe d'appui sur la deuxième face d'appui peut être déterminée pour coïncider avec la position engagée de la roue dentée.

Les seconds moyens de guidage du montant peuvent comprendre au moins une troisième face de guidage s'étendant selon la deuxième direction, en tout ou partie, de manière inclinée au moins selon la troisième direction. La deuxième face de guidage et la troisième face de guidage peuvent présenter des inclinaisons respectives opposées l'une de l'autre selon la troisième direction. Les seconds moyens de guidage du moyen de grimpe peuvent comprendre au moins un troisième organe d'appui, le troisième organe d'appui étant configuré pour se déplacer le long de la troisième face de guidage entre une position initiale et une position finale lors du déplacement d'engagement du moyen de grimpe. La position finale du troisième organe d'appui sur la troisième face d'appui peut être déterminée pour coïncider avec la position engagée de la roue dentée.

L'ensemble peut comprendre un véhicule, de préférence pour système automatisé de stockage et de récupération, le véhicule comprenant un châssis et ledit au moins un moyen de grimpe, ledit au moins un moyen de grimpe étant mobile par rapport au châssis entre une position escamotée et une position déployée dans laquelle la roue dentée est dans la position engagée.

Le montant peut être fixé au sol et le véhicule peut comprendre des moyens de roulage, les moyens de roulage étant en contact avec le sol lorsque ledit au moins un moyen de grimpe est dans sa position escamotée, pour permettre au véhicule de se déplacer au sol, et à distance du sol lorsque ledit au moins un moyen de grimpe est dans sa position déployée.

Le montant peut être fixé au sol et le véhicule peut comprendre des moyens de roulage, ledit au moins un moyen de grimpe étant relié au châssis du véhicule par un mécanisme de déploiement présentant un degré de mobilité selon la première direction de sorte que les moyens de roulage sont en contact avec le sol à la fois lorsque ledit au moins un moyen de grimpe est dans sa position escamotée et dans sa position déployée.

Selon un autre aspect, il est proposé un procédé d'engagement d'au moins un moyen de grimpe avec au moins un montant pour rack de stockage, ledit montant s'étendant selon une première direction et comprenant une crémaillère qui comporte des premières dents saillantes selon une deuxième direction perpendiculaire à la première direction. Le moyen de grimpe peut être destiné à un véhicule apte à se déplacer le long du montant selon la première direction, le moyen de grimpe comprenant une roue dentée qui présente un axe de rotation et qui comprend, à sa périphérie, des deuxièmes dents saillantes radialement par rapport à l'axe de rotation, les deuxièmes dents de la roue dentée étant adaptées pour engrener avec les premières dents de la crémaillère,
le procédé comprenant un déplacement d'engagement du moyen de grimpe vers le montant selon la deuxième direction, avec l'axe de rotation de la roue dentée perpendiculaire à la première direction et à la deuxième direction, au cours duquel des premiers moyens de guidage coopèrent l'un avec l'autre afin de guider la roue dentée du moyen de grimpe selon la première direction jusque dans une position engagée dans laquelle les deuxièmes dents de la roue dentée engrènent avec les premières dents de la crémaillère.

### Brève description des dessins

D'autres caractéristiques, détails et avantages apparaîtront à la lecture de la description détaillée ci-après, et à l'analyse des dessins annexés, sur lesquels :
Figure 1 représente une vue de côté d'un ensemble comprenant une roue dentée d'un moyen de grimpe pour véhicule, engagée avec une crémaillère d'un montant de rack de stockage.
Figure 2 représente une vue en perspective de l'ensemble de la figure 1.
Figure 3 représente une autre vue en perspective de l'ensemble de la figure 1 selon une variante de réalisation.
Figure 4 représente une vue de dessous de l'ensemble de la figure 3.
Figure 5 représente un rack de stockage comprenant le montant des figures 1 à 4.
Figure 6 représente partiellement le rack de stockage de la figure 5 et un véhicule comprenant le moyen de grimpe des figures 1 à 4.

### Description des modes de réalisation

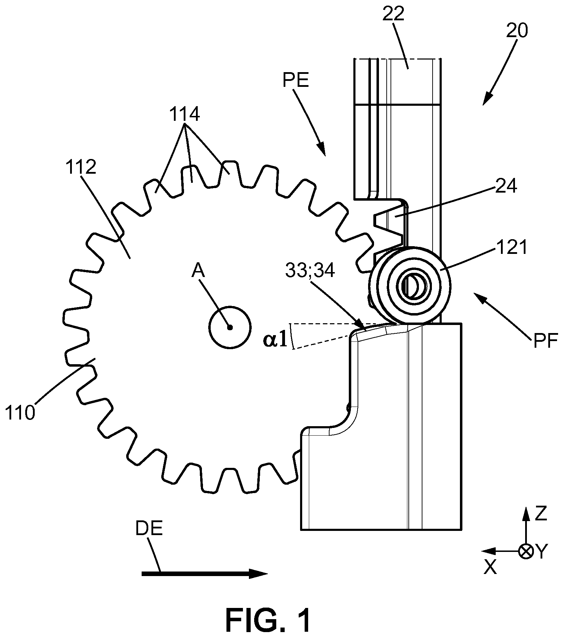

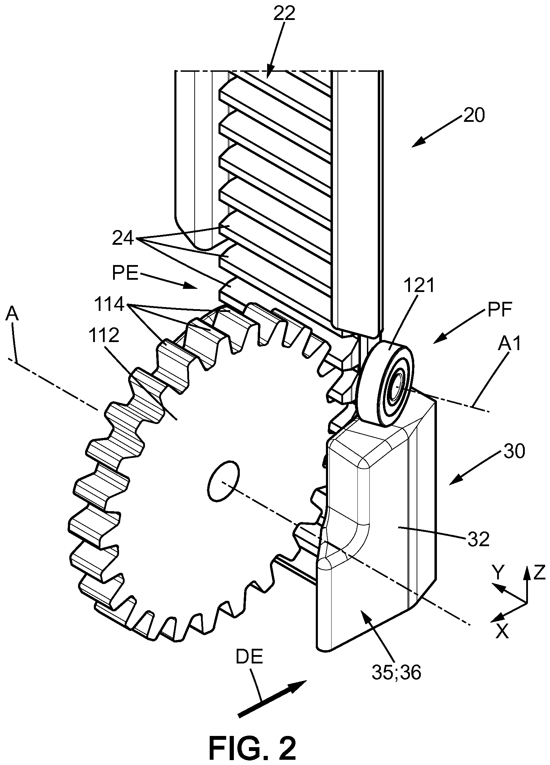

Il est maintenant fait référence aux figures 1 et 2 qui représentent un ensemble comprenant au moins un montant 20 et au moins un moyen de grimpe 110.

Ledit au moins un montant 20 est destiné à un rack 10 de stockage. Le montant 20 s'étend selon une première direction Z. La première direction Z comprend au moins une composante selon une direction verticale, qui correspond à la direction du champ de gravité, et de préférence coïncide avec la direction verticale. Le montant 20 comprend une crémaillère 22 qui comporte des premières dents 24 saillantes selon une deuxième direction X perpendiculaire à la première direction Z.

Ledit au moins un moyen de grimpe 110 est destiné à un véhicule 100 apte à se déplacer le long dudit montant 20 selon la première direction Z. Le moyen de grimpe 110 comprend une roue dentée 112 qui présente un axe de rotation A. La roue dentée 112 comprend, à sa périphérie, des deuxièmes dents 114 saillantes radialement par rapport à l'axe de rotation A. Les deuxièmes dents 114 de la roue dentée 112 sont adaptées pour engrener avec les premières dents 24 de la crémaillère 22.

De manière remarquable, ledit au moins un montant 20 et ledit au moins un moyen de grimpe 110 comprennent des premiers moyens de guidage 34 ; 121 configurés pour coopérer l'un avec l'autre lors d'un déplacement d'engagement DE du moyen de grimpe 110 vers le montant 20 au moins selon la deuxième direction X. Il est ainsi obtenu un guidage de la roue dentée 112 du moyen de grimpe 110 selon la première direction Z jusque dans une position engagée PE, visible aux figures 1 et 2, dans laquelle les deuxièmes dents 114 de la roue dentée 112 engrènent avec les premières dents 24 de la crémaillère 22. Comme représenté, dans la position engagée, l'axe de rotation A de la roue dentée 112 s'étendant selon une troisième direction Y perpendiculaire à la première direction Z et à la deuxième direction X. Aussi, le déplacement d'engagement DE peut être effectué avec l'axe de rotation A de la roue dentée 112 s'étendant, de préférence en restant fixe, selon la troisième direction Y.

Autrement dit, ledit au moins montant 20 comprend des premiers moyens de guidage 34 et ledit au moins un moyen de grimpe 110 comprend des moyens de guidage 121, les premiers moyens de guidage 34 ; 121 respectifs du montant 20 et du moyen de grimpe 110 s'associant l'un avec l'autre lors du déplacement d'engagement DE du moyen de grimpe 110 de manière à guider la roue dentée 112 selon la première direction E jusque dans la position engagée PE.

Les premiers moyens de guidage 34 ; 121 respectifs du montant 20 et du moyen de grimpe 110 seront décrits plus en détails ci-après.

Cela permet d'assurer avec certitude l'engagement des deuxièmes dents 114 de la roue dentée 112 avec les premières dents 24 de la crémaillère 22. En d'autres termes, cela permet d'éviter un contact « dent contre dent » entre la roue dentée 112 et la crémaillère 22, ce qui empêcherait un déplacement du premier moyen de grimpe 110, et consécutivement du véhicule 100 correspondant, le long de la crémaillère 22 selon la première direction Z. En effet, l'agencement de premiers moyens de guidage 34 ; 121 associés, configurés pour coopérer les uns avec les autres pendant le mouvement d'engagement du moyen de grimpe 110 vers le montant 20, garantit un alignement précis de la roue dentée 112 avec la crémaillère 22 selon la première direction Z. En conséquence, la fiabilité du moyen de grimpe 110 du véhicule 100 est améliorée, en particulier lors du déplacement le long de la crémaillère 22 selon la première direction Z. Cela réduit notamment l'impact des variations telles que le positionnement du rack 10, les tolérances de planéité du sol et les tolérances de fabrication de la crémaillère 22 et/ou du moyen de grimpe 110, voir même du véhicule 100.

La disposition spécifique selon laquelle l'axe de rotation A de la roue dentée 112 s'étend dans une troisième direction Y, perpendiculaire à la première direction Z et à la deuxième direction X, contribue à un processus d'engagement plus stable et mieux contrôlé.

Dans sa position engagée PE, la roue dentée 112 peut être apte à se déplacer le long de la crémaillère 22 suivant la première direction Z. Dans sa position engagée PE, l'axe de rotation A de la roue dentée 112 peut s'étendre selon la troisième direction Y.

Les premiers moyens de guidage 34 ; 121 du montant 20 et du moyen de grimpe 110 peuvent être configurés pour coopérer par complémentarité de forme. La complémentarité de forme entre les premiers moyens de guidage 34 ; 121 du montant 20 et du moyen de grimpe 110 facilite un engagement plus doux, avec moins d'à-coups, de la roue dentée 112 avec la crémaillère 22. Cela réduit l'usure des composants et contribue à prolonger la durée de vie du système, tout en permettant des vitesses de fonctionnement plus élevées et une meilleure efficacité pendant le processus d'engagement.

Plus particulièrement, les premiers moyens de guidage 34 ; 121 du montant 20 peuvent comprendre une première face de guidage 34 s'étendant selon la deuxième direction X, en tout ou partie, de manière inclinée au moins selon la première direction Z. Selon une autre formulation, un axe perpendiculaire à la première face de guidage 34 peut s'étendre selon une direction inclinée par rapport à la première direction Z, c'est-à-dire il peut s'étendre selon une direction qui comprend au moins une composante selon la première direction Z et au moins une composante selon la deuxième direction X et éventuellement une composante selon la troisième direction Y. Les premiers moyens de guidage 34 ; 121 du moyen de grimpe 110 peuvent comprendre un premier organe d'appui 121. Le premier organe d'appui 121 est configuré pour se déplacer le long de la première face de guidage 34 entre une position initiale et une position finale PF, visible aux figures 1 et 2, lors du déplacement d'engagement DE du moyen de grimpe 110. La position finale PF du premier organe d'appui 121 sur la première face d'appui peut être déterminée pour coïncider avec la position engagée PE de la roue dentée 112. La roue dentée 112 et le premier organe d'appui 121 peuvent être fixes l'un par rapport à l'autre au moins selon la première direction Z. Le guidage du premier organe d'appui 121 selon la première direction Z le long de la première face de guidage 34 jusque dans sa position finale PF permet de corriger, au cours du déplacement d'engagement DE, un défaut de position de la roue dentée 112, consécutivement du véhicule 100 correspondant, par rapport à la position engagée PE selon la première direction Z. Cela permet ainsi de garantir l'engagement de la roue dentée 112 avec la crémaillère 22, c'est-à-dire en évitant un contact « dent contre dent » entre la roue dentée 112 et la crémaillère 22 qui gênerait, voire empêcherait, l'engagement.

Lorsque la roue dentée 112 est dite « engagée » avec la crémaillère 22, il est entendu que les deuxièmes dents 114 engrènent avec les premières dents 24.

On comprend que le premier organe d'appui 121 peut être déplacé entre la position initiale et la position finale PF par un effet de rampe sur la première face de guidage 34. Aussi, le premier organe d'appui 121 peut être déplacé selon la première direction Z entre la position initiale et la position finale PF. Autrement dit, la position initiale et la position finale PF du premier organe d'appui 121 peuvent être décalées l'une de l'autre selon la première direction Z. Un premier angle d'inclinaison α1 de la première face de guidage 34 par rapport un plan comprenant la deuxième direction X peut être compris entre 0° et 25°.

La position initiale du premier organe d'appui 121 sur la première face de guidage 34 correspond à la position du premier organe d'appui 121 lorsque celui-ci entre en contact avec la première face d'appui. Selon la planéité du sol dans lequel se déplace le véhicule 100, selon les jeux suivant la première direction Z dans le déploiement du moyen de grimpe 110 ou encore selon les tolérances de fabrication du moyen de grimpe 110 et du montant 20, la position initiale du premier organe d'appui 121 sur la première face de guidage 34 peut varier selon première direction Z et/ou la deuxième direction X.

Afin de faciliter encore plus l'engrènement des deuxièmes dents 114 avec les premières dents 24, la position des deuxièmes dents 114 autour de l'axe de rotation A de la roue dentée 112 peut être prédéterminée et fixe pendant le déplacement d'engagement DE. En particulier, la position des deuxièmes dents 114 autour de l'axe de rotation A de la roue dentée 112 peut être déterminée pour permettre un engagement avec les premières dents 24 de la crémaillère 22 lorsque la roue dentée 112 est positionnée selon la première direction Z au niveau de la position d'engagement.

Le premier organe d'appui 121 peut comprendre un galet, voire une roue ou un rouleau ou encore une rampe, configuré pour rouler le long de la première surface de guidage lors du déplacement d'engagement DE du moyen de grimpe 110. Cette action de roulement réduit la friction et l'usure des composants, ce qui accroît la durabilité et réduit les besoins de maintenance. Cette action de roulement assure un contact constant entre le premier organe d'appui 121 et la première surface de guidage inclinée de l'organe de centrage, ce qui permet un positionnement plus fiable et plus précis de la roue dentée 112 selon la première direction Z pendant le processus d'engagement.

Le moyen de grimpe 110 peut comprendre un support 111. La roue dentée 112 peut être montée pivotante sur le support 111 autour de l'axe de rotation A. Cette disposition apporte une intégrité structurelle supplémentaire, garantissant que la roue dentée 112 conserve une orientation et un engagement corrects avec la crémaillère 22 tout au long du processus d'engagement. De même, le premier organe d'appui 121 peut être monté sur le support 111. Plus particulièrement, le galet peut être monté pivotant sur le support 111 autour d'un premier axe A1. Une direction d'extension du premier axe A1 peut comprendre au moins une composante selon une direction d'extension de l'axe de rotation A de la roue dentée 112. Selon un cas particulier, le premier axe A1 peut être parallèle à l'axe de rotation A de la roue. Autrement, le premier axe A1 peut être incliné par rapport à l'axe de rotation A de la roue dentée 112. Par exemple, lorsque l'axe de rotation A de la roue dentée 112 s'étend selon la troisième direction Y, le premier axe A1 peut s'étendre au moins selon la troisième direction Y, et peut s'étendre au surplus selon la première direction Z et/ou la deuxième direction X.

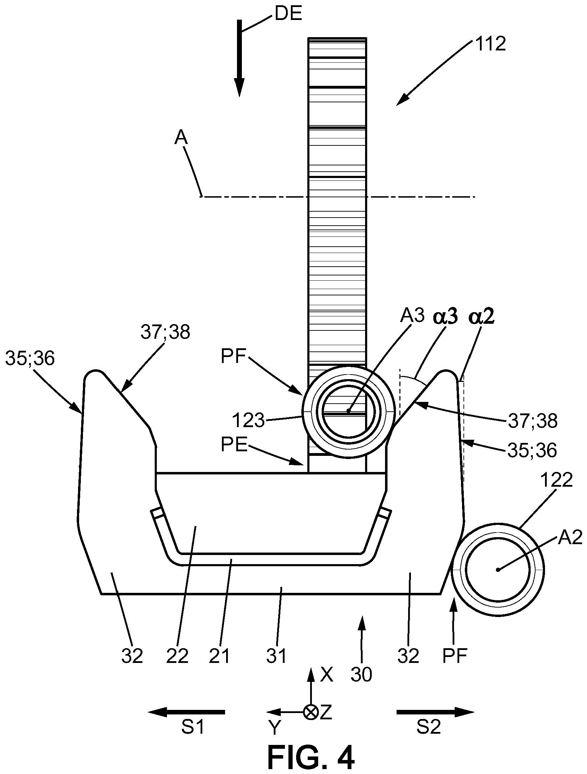

Le montant 20 peut comprendre un support 30 agencé au niveau d'une extrémité de la crémaillère 22, de préférence une extrémité inférieure de la crémaillère. Le support 30 est plus particulièrement visible à la figure 4 qui sera décrite en détail plus loin. Le support 30 peut comprendre au moins une paroi latérale 32 qui s'étend selon la deuxième direction X. Ladite au moins une paroi latérale 32 peut comprendre la première face de guidage 34.

Le support 30 peut comprendre une paroi centrale 31. Ladite au moins une paroi latérale 32 peut s'étendre selon la deuxième direction X depuis la paroi centrale 31. Ladite au moins une paroi latérale 32 peut être agencée latéralement aux premières dents 24 de la crémaillère 22 selon la troisième direction Y. Ladite au moins une paroi latérale 32 peut comprendre une face supérieure 33, notamment opposée au sol selon la première direction Z. La face supérieure 33 de ladite au moins une paroi latérale 32 peut comprendre la première face d'appui.

Le montant 20 peut comprendre un poteau 21 qui s'étend selon la première direction Z. La crémaillère 22 peut être fixée au poteau 21. Le support 30 peut également être fixé au poteau 21. En particulier, le poteau 21 peut comprendre une face avant et une face arrière, opposées l'une de l'autre selon la deuxième direction X. La crémaillère 22 peut alors fixée au poteau 21 au niveau de la face avant, et/ou le support 30 peut être fixé au poteau 21 au niveau de la face arrière.

Ladite au moins une paroi latérale 32 peut comprendre deux parois latérales 32. En d'autres termes, le support 30 peut comprendre deux parois latérales 32 telles que décrites ci-avant en référence à ladite au moins une paroi latérale 32. On comprend que chaque paroi latérale 32 comprend une première face de guidage 34 respective. Chaque paroi latérale 32 peut s'étendre suivant la deuxième direction X depuis une portion d'extrémité respective de la paroi centrale 31 selon la troisième direction Y. Le support 30 peut présenter une forme en C. La crémaillère 22 peut être agencée, voire intercalée, entre les parois latérales 32 selon la troisième direction Y.

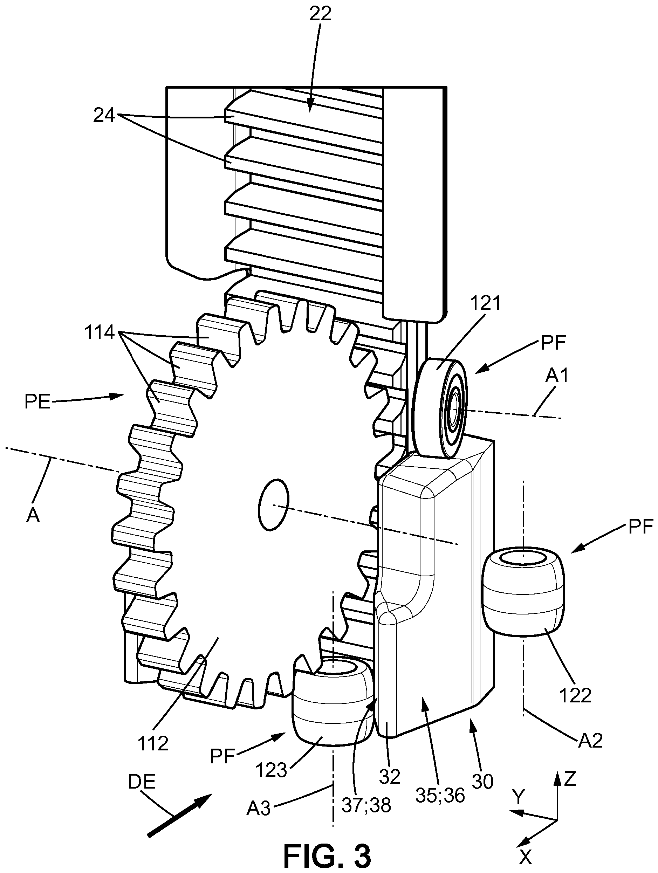

Il est maintenant fait référence aux figures 3 et 4 qui représentent le même ensemble qu'aux figures 1 et 2, à l'exception qu'il comprend en sus des seconds moyens de guidage 36 ; 122 ; 38 ; 123. Plus particulièrement, ledit au moins un montant 20 et ledit au moins un moyen de grimpe 110 comprennent des seconds moyens de guidage 36 ; 122 ; 38 ; 123 associés configurés pour coopérer l'un avec l'autre lors du déplacement d'engagement DE du moyen de grimpe 110. Il est ainsi obtenu un guidage de la roue dentée 112 du moyen de grimpe 110 au moins selon la troisième direction Y jusque dans la position engagée PE. Cela permet d'assurer une position correcte des deuxièmes dents 114 de la roue dentée 112 par rapport aux premières dents 24 de la crémaillère 22 selon la troisième direction Y.

Les seconds moyens de guidage 36 ; 122 ; 38 ; 123 du montant 20 et du moyen de grimpe 110 peuvent être configurés pour coopérer par complémentarité de forme.

La crémaillère 22 peut comprendre un premier bord latéral et un second bord latéral de chaque côté selon la troisième direction Y. Dans sa position engagée PE, la roue dentée 112 peut être plus proche selon la troisième direction Y de l'un parmi le premier bord latéral et le second bord latéral que de l'autre parmi le premier bord latéral et le second bord latéral. Autrement dit, dans sa position engagée PE, la roue dentée 112 peut être décentrée par rapport à une position médiane sur la crémaillère 22 selon la troisième direction Y. Alternativement, dans la position engagée PE, la roue dentée 112 peut être équidistante de chacun du premier bord latéral et du second bord latéral de la crémaillère 22. Ou autrement dit, dans sa position engagée PE, la roue dentée 112 peut être centrée par rapport à une position médiane sur la crémaillère 22.

Les seconds moyens de guidage 36 ; 122 ; 38 ; 123 du montant 20 peuvent comprendre au moins une deuxième face de guidage 36 s'étendant selon la deuxième direction X, en tout ou partie, de manière inclinée au moins selon la troisième direction Y. Selon une autre formulation, un axe perpendiculaire à la deuxième face de guidage 36 peut s'étendre selon une direction inclinée par rapport à la troisième direction Y, c'est-à-dire il peut s'étendre selon une direction qui comprend au moins une composante selon la deuxième direction X et au moins une composante selon la troisième direction Y et éventuellement une composante selon la première direction Z. Les seconds moyens de guidage 36 ; 122 ; 38 ; 123 du moyen de grimpe 110 peuvent comprendre au moins un deuxième organe d'appui 122. Le deuxième organe d'appui 122 peut être configuré pour se déplacer le long de la deuxième face de guidage 36 entre une position initiale et une position finale PF lors du déplacement d'engagement DE du moyen de grimpe 110. La position finale PF du deuxième organe d'appui 122 sur la deuxième face d'appui peut être déterminée pour coïncider avec la position engagée PE de la roue dentée 112. Le guidage du deuxième organe d'appui 122 selon la troisième direction Y le long de la deuxième face de guidage 36 jusque dans sa position finale PF permet de corriger, au cours du déplacement d'engagement DE, un défaut de positionnement selon un premier sens S1 de la troisième direction Y de la roue dentée 112 par rapport à la position engagée PE souhaitée, voire un défaut de positionnement global du véhicule 100 correspondant selon la troisième direction Y.

On comprend que le deuxième organe d'appui 122 peut être déplacé entre la position initiale et la position finale PF par un effet de rampe sur la deuxième face de guidage 36. Aussi, le deuxième organe d'appui 122 peut être déplacé selon la troisième direction Y entre la position initiale et la position finale PF. Autrement dit, la position initiale et la position finale PF du deuxième organe d'appui 122 peuvent être décalées l'une de l'autre selon la troisième direction Y.

De plus, les seconds moyens de guidage 36 ; 122 ; 38 ; 123 du montant 20 peuvent comprendre au moins une troisième face de guidage 38 s'étendant selon la deuxième direction X, en tout ou partie, de manière inclinée au moins selon la troisième direction Y. Selon une autre formulation, un axe perpendiculaire à la troisième face de guidage 38 peut s'étendre selon une direction inclinée par rapport à la troisième direction Y, c'est-à-dire il peut s'étendre selon une direction qui comprend au moins une composante selon la deuxième direction X et au moins une composante selon la troisième direction Y et éventuellement une composante selon la première direction Z. La deuxième face de guidage 36 et la troisième face de guidage 38 peuvent présenter des inclinaisons respectives opposées l'une de l'autre selon la troisième direction Y. De même, les seconds moyens de guidage 36 ; 122 ; 38 ; 123 du moyen de grimpe 110 peuvent comprendre au moins un troisième organe d'appui 123. Le troisième organe d'appui 123 peut être configuré pour se déplacer le long de la troisième face de guidage 38 entre une position initiale et une position finale PF lors du déplacement d'engagement DE du moyen de grimpe 110. La position finale PF du troisième organe d'appui 123 sur la troisième face d'appui peut être déterminée pour coïncider avec la position engagée PE de la roue dentée 112. Le guidage du troisième organe d'appui 123 selon la troisième direction Y le long de la troisième face de guidage 38 jusque dans sa position finale PF permet de corriger, au cours du déplacement d'engagement DE, un défaut de positionnement selon un second sens S2 de la troisième direction Y de la roue dentée 112 par rapport à la position engagée PE souhaitée, voire un défaut de positionnement global du véhicule 100 correspondant selon la troisième direction Y.

On comprend que le troisième organe d'appui 123 peut être déplacé entre la position initiale et la position finale PF par un effet de rampe sur la troisième face de guidage 38. Aussi, le troisième organe d'appui 123 peut être déplacé selon la première direction Z entre la position initiale et la position finale PF. Autrement dit, la position initiale et la position finale PF du troisième organe d'appui 123 peuvent être décalées l'une de l'autre selon la première direction Z.

La deuxième face de guidage 36 et la troisième face de guidage 38 peuvent être opposées l'une de l'autre selon la troisième direction Y. Un deuxième angle d'inclinaison α2 de la deuxième face de guidage 36 par rapport à un plan comprenant la deuxième direction X peut être différent ou égal, en valeur absolue, à un troisième angle d'inclinaison α3 de la troisième face de guidage 38 par rapport à un plan comprenant la deuxième direction X. Le deuxième angle d'inclinaison α2 de la deuxième face de guidage 36 et/ou le troisième angle d'inclinaison α3 de la troisième face de guidage 38 peuvent être compris entre 0° et 25°.

Ladite au moins une paroi latérale 32 peut comprendre la deuxième face de guidage 36 et/ou la troisième face de guidage 38. Ladite au moins une paroi latérale 32 peut comprendre une face interne 37. La face interne 37 de la paroi latérale 32 peut être en regard de, voire en appui sur, un bord de la crémaillère 22 selon la troisième direction Y. Ladite au moins une paroi latérale 32 peut comprendre une face externe 35. La face externe 35 de la paroi latérale 32 peut être opposée à un bord de la crémaillère 22 selon la troisième direction Y. La face interne 37 et la face externe 35 de ladite au moins une paroi latérale 32 peuvent être opposées l'une de l'autre. La face externe 35 peut comprendre la deuxième face de guidage 36. La face interne 37 peut comprendre la troisième face de guidage 38.

Le deuxième organe d'appui 122 et/ou le troisième organe d'appui 123 peuvent comprendre un galet configuré pour rouler respectivement le long de la deuxième face d'appui et le long de la troisième face d'appui lors du déplacement d'engagement DE dudit au moins moyen de grimpe 110.

Le galet du deuxième organe d'appui 122 peut être monté sur le support 111 autour d'un deuxième axe A2. Le deuxième axe A2 peut s'étendre selon la première direction Z. Le galet du troisième organe d'appui 123 peut être monté sur le support 111 autour d'un troisième axe A3. Le troisième axe A3 peut s'étendre selon la première direction Z.

Plus généralement, on comprend que les seconds moyens de guidage 36 ; 122 ; 38 ; 123 du montant 20 et du moyen de grimpe 110 peuvent être configurés pour coopérer par complémentarité de forme.

Il est maintenant décrit une variante de réalisation non représentée des seconds moyens de guidage 36 ; 122 ; 38 ; 123. Ledit au moins un montant 20 peut comprendre un premier montant 20 et un deuxième montant 20 espacés l'un de l'autre selon la troisième direction Y. Ledit au moins un moyen de grimpe 110 peut comprendre un premier moyen de grimpe 110 et un deuxième moyen de grimpe 110, la roue dentée 112 du premier moyen de grimpe 110 étant adaptée pour engager la crémaillère 22 du premier montant 20 et la roue dentée 112 du deuxième moyen de grimpe 110 étant adaptée pour engager la crémaillère 22 du deuxième montant 20. Le premier moyen de grimpe 110 et le deuxième moyen de grimpe 110 peuvent être destinés à un seul véhicule 100 apte à se déplacer simultanément le long du premier montant 20 et du deuxième montant 20 le long de la première direction Z. Plus précisément, chacun du premier moyen de grimpe 110 et du deuxième moyen de grimpe 110 peut être monté mobile sur le châssis 101 du véhicule 100 entre une position escamotée et une position déployée respectives. Les seconds moyens de guidage 36 ; 122 ; 38 ; 123 du premier montant 20 et du deuxième montant 20 peuvent chacun comprendre uniquement la deuxième face de guidage 36. Similairement, les seconds moyens de guidage 36 ; 122 ; 38 ; 123 du premier moyen de grimpe 110 et du deuxième moyen de grimpe 110 peuvent chacun comprendre uniquement le deuxième organe d'appui 122. La deuxième face de guidage 36 du premier montant 20 et la deuxième face de guidage 36 du deuxième montant 20 peuvent présenter une inclinaison opposée l'une de l'autre par rapport à la troisième direction Y.

Ainsi, le guidage du deuxième organe d'appui 122 du premier moyen de grimpe 110 selon la troisième direction Y le long de la deuxième face de guidage 36 du premier montant 20 jusque dans sa position finale PF permet de corriger, au cours du déplacement d'engagement DE, un défaut de positionnement selon le second sens de la troisième direction Y des roues dentées 112 du premier moyen de grimpe 110 et du deuxième moyen de grimpe 110 par rapport à leurs positions engagées PE souhaitées, voire un défaut de positionnement global du véhicule 100 correspondant selon la troisième direction Y.

Similairement, le guidage du deuxième organe d'appui 122 du deuxième moyen de grimpe 110 selon la troisième direction Y le long de la deuxième face de guidage 36 du deuxième montant 20 jusque dans sa position finale PF permet de corriger, au cours du déplacement d'engagement DE, un défaut de positionnement selon le premier sens de la troisième direction Y des roues dentées 112 du premier moyen de grimpe 110 et du deuxième moyen de grimpe 110 par rapport à leurs positions engagées PE souhaitées, voire un défaut de positionnement global du véhicule 100 correspondant selon la troisième direction Y.

Cette alternative permet d'éviter une troisième face de guidage 38 et un troisième organe d'appui 123 pour les seconds moyens de guidage 36 ; 122 ; 38 ; 123.

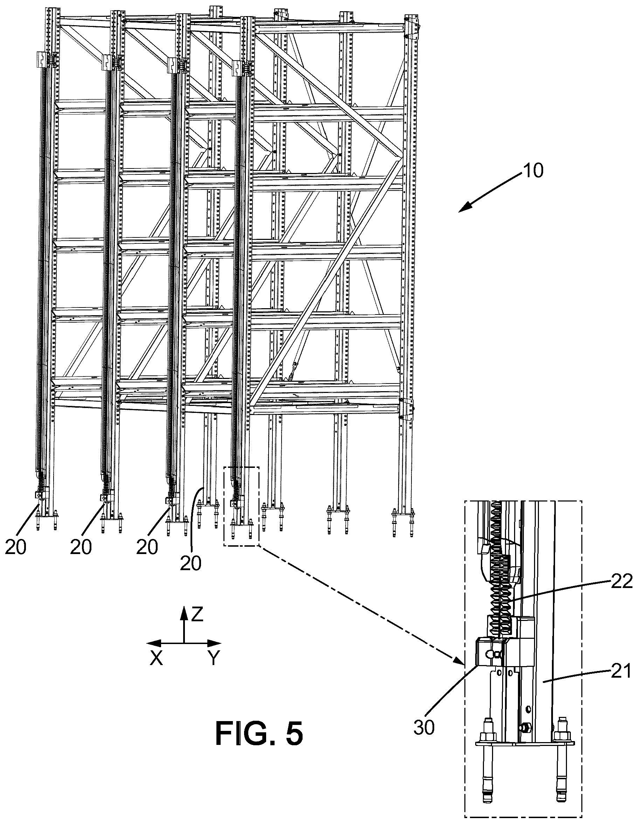

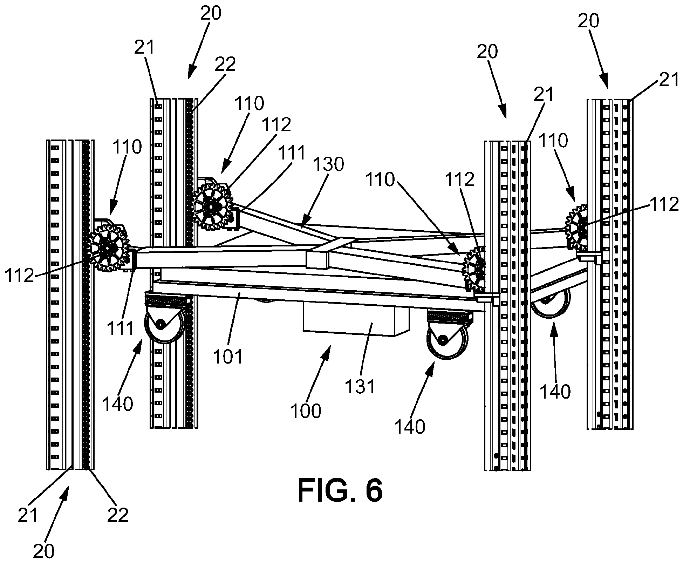

En référence aux figures 5 et 6, il est maintenant décrit plus en détail au moins un véhicule 100 et au moins un rack de stockage. Ledit au moins un véhicule 100 et ledit au moins un rack 10 de stockage sont de préférence destinés à un système automatisé de stockage et de récupération.

Ledit au moins un rack 10 de stockage peut comprendre un ou plusieurs montants 20 tels que décrit ci-avant, et alignés de manière espacée selon la troisième direction Y dans le cas d'une pluralité. Le rack 10 est adapté pour entreposer des articles. Le véhicule 100 peut être destiné à récupérer un article dans le rack 10, notamment en déplaçant le long d'un ou plusieurs montants 20 par l'intermédiaire dudit au moins un moyen de grimpe 110. De préférence, le véhicule 100 peut se déplacer le long de deux montants 20 d'un rack 10 par l'intermédiaire de deux moyens de grimpe 110. De préférence encore, le véhicule 100 peut se déplacer le long de deux montants 20 de deux racks 10 disposés en vis-à-vis l'un de l'autre selon la deuxième direction X, notamment par l'intermédiaire de quatre moyens de grimpe 110.

Le véhicule peut être à guidage automatique, c'est à dire du type « automated guided vehicle » ou AGV en anglais. À cet effet, le véhicule peut comprendre des moyens de guidage embarqués adaptés au guidage automatique du véhicule. Le véhicule 100 peut comprendre un châssis 101 et ledit au moins un moyen de grimpe 110 tel que décrit en référence aux figures 1 à 4. Ledit au moins un moyen de grimpe 110 peut être mobile par rapport au châssis 101 entre une position escamotée et une position déployée dans laquelle la roue dentée 112 est dans la position engagée PE. Ledit au moins un moyen de grimpe 110 peut passer de la position escamotée à la position déployée par le déplacement d'engagement DE du moyen de grimpe 110. Le moyen de grimpe 110 peut être plus proche du châssis 101 dans la position escamotée qu'il ne l'est dans la position déployée. Dans la position escamotée, le moyen de grimpe 110 peut être, en tout ou partie, logé dans le châssis 101.

Le véhicule 100 peut comprend des moyens de roulage 140, les moyens de roulage 140 étant en contact avec le sol lorsque ledit au moins un moyen de grimpe 110 est dans sa position escamotée, pour permettre au véhicule 100 de se déplacer au sol. Les moyens de roulages 140 peuvent être montés sur le châssis 101. Les moyens de roulage 140 peuvent être motorisés. Les moyens de roulage 140 peuvent comprendre une ou plusieurs roues de roulage, et notamment au moins un moteur, de préférence unique, pour actionner lesdites une ou plusieurs roues de roulage. Lorsque chaque moyen de grimpe 110 est dans sa position escamotée, le véhicule 100 peut circuler au sol, en particulier le véhicule 100 peut circuler selon la deuxième direction X entre deux montants 20 adjacents suivant la troisième direction Y.

Ledit au moins un moyen de grimpe 110 peut être à distance du sol lorsque ledit au moins un moyen de grimpe 110 est dans sa position déployée. Alternativement, ledit au moins un moyen de grimpe 110 peut être relié au châssis 101 du véhicule 100 par un mécanisme de déploiement 130 présentant un degré de mobilité selon la première direction Z de sorte que les moyens de roulage 140 sont en contact avec le sol à la fois lorsque ledit au moins un moyen de grimpe 110 est dans sa position escamotée et dans sa position déployée. Par exemple, le mécanisme de déploiement 130 peut permettre un déplacement relatif libre entre la roue dentée 112 et le châssis 101. Autrement dit, la roue dentée 112 peut être déplacée selon une course limitée suivant la première direction Z par rapport au châssis 101, le châssis 101 restant de préférence fixe. Le degré de mobilité, ou liberté, du mécanisme de déploiement 130 peut résulter d'un jeu intrinsèque dans l'assemblage du mécanisme ou peut résulter d'une liaison mécanique adaptée à un tel mouvement. Le mécanisme de déploiement peut par exemple comprendre un bras déployable associé à chaque moyen de grimpe et au bout duquel est fixé le support 111 dudit moyen de grimpe associé. Le véhicule 100 peut comprendre un moteur 131 unique pour le déploiement de chaque moyen de grimpe 110 et/ou pour entrainer la roue dentée 112 de chaque moyen de grime autour de son axe de rotation A respectif.

Afin de connaitre et régler la position des deuxièmes dents 114 de la roue dentée 112 de chaque moyen de grimpe autour de l'axe de rotation A, il peut être prévu un codeur absolu entre le moteur 131 et la roue dentée 112, adapté pour retourner la position circonférentielle des deuxièmes dents 114 autour de l'axe de rotation A. Alternativement ou au surplus, il peut être prévu une butée sur le châssis 101 contre laquelle l'une des deuxièmes dents 114 de la roue dentée 112 de chaque moyen de grimpe 110 vient en appui dans la position escamotée et un codeur relatif entre le moteur 131 et la roue dentée 112, adapté pour retourner la position circonférentielle des deuxièmes dents 114 autour de l'axe de rotation A. Encore alternativement ou au surplus, il peut être prévu un capteur adapté pour mesurer la position circonférentielle autour de l'axe de rotation A d'au moins l'une des deuxièmes dents 114 et adapté pour retourner la position circonférentielle des deuxièmes dents 114 autour de l'axe de rotation A.

Enfin, il est décrit un procédé d'engagement d'au moins un moyen de grimpe 110 avec au moins un montant 20 pour rack 10 de stockage. Ledit montant 20 s'étend selon une première direction Z et comprend une crémaillère 22 qui comporte des premières dents 24 saillantes selon une deuxième direction X perpendiculaire à la première direction Z, et ledit moyen de grimpe 110 est destiné à un véhicule 100 apte à se déplacer le long du montant 20 selon la première direction Z, le moyen de grimpe 110 comprenant une roue dentée 112 qui présente un axe de rotation A et qui comprend, à sa périphérie, des deuxièmes dents 114 saillantes radialement par rapport à l'axe de rotation A, les deuxièmes dents 114 de la roue dentée 112 étant adaptées pour engrener avec les premières dents 24 de la crémaillère 22.

Le procédé peut comprendre un déplacement d'engagement DE du moyen de grimpe 110 vers le montant 20 selon la deuxième direction X, avec l'axe de rotation A de la roue dentée 112 perpendiculaire à la première direction Z et à la deuxième direction X, au cours duquel des premiers moyens de guidage 34 ; 121 coopèrent l'un avec l'autre afin de guider la roue dentée 112 du moyen de grimpe 110 selon la première direction Z jusque dans une position engagée PE dans laquelle les deuxièmes dents 114 de la roue dentée 112 engrènent avec les premières dents 24 de la crémaillère 22.

En guidant la roue dentée 112 du moyen de grimpe 110 dans la première direction Z jusqu'à une position d'engagement où les secondes dents de la roue dentée 112 s'engrènent avec les premières dents 24 de la crémaillère 22, la méthode assure un alignement et un engagement précis entre le moyen de grimpe 110 et la crémaillère 22. Cet alignement précis est essentiel pour que le véhicule 100 puisse se déplacer le long du montant 20 sans glisser ou se désaligner, ce qui pourrait entraîner des inefficacités opérationnelles ou endommager la roue dentée 112 et/ou la crémaillère 22. Le mouvement d'engagement du moyen de grimpe 110 vers le montant 20 dans la deuxième direction X, avec l'axe de rotation A de la roue dentée 112 maintenu perpendiculaire aux première direction Z et deuxième direction X, garantit que la roue dentée 112 s'approche de la crémaillère 22 d'une manière contrôlée. Cette approche perpendiculaire minimise le risque que les deuxièmes dents 114 de la roue dentée 112 heurtent les premières dents 24 de la crémaillère 22 de manière oblique, ce qui pourrait entraîner une usure ou une rupture. Au contraire, les dents s'engagent en douceur, ce qui prolonge la durée de vie de la roue dentée 112 et de la crémaillère 22 et réduit les besoins d'entretien. La coopération des premiers moyens de guidage 34 ; 121 pendant le mouvement d'engagement facilite un processus d'engrènement stable et contrôlé entre la roue dentée 112 et la crémaillère 22. Cette stabilité est essentielle pour un fonctionnement fiable du véhicule 100 lorsqu'il monte ou descend le long du montant 20, en particulier dans des conditions de charge variables où le centre de gravité du véhicule 100 peut se déplacer, ce qui peut affecter la dynamique de l'engrènement.

## Revendications

1. Ensemble comprenant :
- au moins un montant (20) pour rack (10) de stockage s'étendant selon une première direction (Z), le montant (20) comprenant une crémaillère (22) qui comporte des premières dents (24) saillantes selon une deuxième direction (X) perpendiculaire à la première direction (Z) ;
- au moins un moyen de grimpe (110) pour un véhicule (100) apte à se déplacer le long dudit montant (20) selon la première direction (Z), le moyen de grimpe (110) comprenant une roue dentée (112) qui présente un axe de rotation (A) et qui comprend, à sa périphérie, des deuxièmes dents (114) saillantes radialement par rapport à l'axe de rotation (A), les deuxièmes dents (114) de la roue dentée (112) étant adaptées pour engrener avec les premières dents (24) de la crémaillère (22),
**caractérisé en ce que** ledit au moins un montant (20) et ledit au moins un moyen de grimpe (110) comprennent des premiers moyens de guidage (34 ; 121) associés configurés pour coopérer l'un avec l'autre lors d'un déplacement d'engagement (DE) du moyen de grimpe (110) vers le montant (20) au moins selon la deuxième direction (X), afin de guider la roue dentée (112) du moyen de grimpe (110) selon la première direction (Z) jusque dans une position engagée (PE) dans laquelle les deuxièmes dents (114) de la roue dentée (112) engrènent avec les premières dents (24) de la crémaillère (22), l'axe de rotation (A) de la roue dentée (112) s'étendant selon une troisième direction (Y) perpendiculaire à la première direction (Z) et à la deuxième direction (X) dans la position engagée (PE).

2. Ensemble selon la revendication précédente, dans lequel les premiers moyens de guidage (34 ; 121) du montant (20) et du moyen de grimpe (110) sont configurés pour coopérer par complémentarité de forme.

3. Ensemble selon l'une quelconque des revendications précédentes, dans lequel les premiers moyens de guidage (34 ; 121) du montant (20) comprennent une première face de guidage (34) s'étendant selon la deuxième direction (X), en tout ou partie, de manière inclinée au moins selon la première direction (Z) et les premiers moyens de guidage (34 ; 121) du moyen de grimpe (110) comprennent un premier organe d'appui (121), le premier organe d'appui (121) étant configuré pour se déplacer le long de la première face de guidage (34) entre une position initiale et une position finale (PF) lors du déplacement d'engagement (DE) du moyen de grimpe (110), la position finale (PF) du premier organe d'appui (121) sur la première face d'appui étant déterminée pour coïncider avec la position engagée (PE) de la roue dentée (112).

4. Ensemble selon la revendication précédente, la roue dentée (112) et le premier organe d'appui (121) sont fixes l'un par rapport à l'autre au moins selon la première direction (Z).

5. Ensemble selon la revendication 3 ou 4, dans lequel le premier organe d'appui (121) comprend un galet configuré pour rouler le long de la première surface de guidage lors du déplacement d'engagement (DE) du moyen de grimpe (110).

6. Ensemble selon l'une quelconque des revendications 3 à 5, dans lequel le moyen de grimpe (110) comprend un support (111), la roue dentée (112) étant montée pivotante sur le support (111) autour de l'axe de rotation (A) et le premier organe d'appui (121) étant monté sur le support (111).

7. Ensemble selon la revendication précédente, la revendication 5 s'appliquant, dans lequel le galet est monté pivotant sur le support (111) autour d'un premier axe (A1).

8. Ensemble selon l'une quelconque des revendications 3 à 7, dans lequel le montant (20) comprend un support (30) agencé au niveau d'une extrémité de la crémaillère (22), le support (30) comprenant au moins une paroi latérale (32) qui s'étend selon la deuxième direction (X), ladite paroi latérale (32) comprenant la première face de guidage (34).

9. Ensemble selon l'une quelconque des revendications précédentes, dans lequel ledit au moins un montant (20) et ledit au moins un moyen de grimpe (110) comprennent des seconds moyens de guidage (36 ; 122 ; 38 ; 123) associés configurés pour coopérer l'un avec l'autre lors du déplacement d'engagement (DE) du moyen de grimpe (110), afin de guider la roue dentée (112) du moyen de grimpe (110) au moins selon la troisième direction (Y) jusque dans la position engagée (PE).

10. Ensemble selon la revendication précédente, dans lequel les seconds moyens de guidage (36 ; 122 ; 38 ; 123) du montant (20) comprennent au moins une deuxième face de guidage (36) s'étendant selon la deuxième direction (X), en tout ou partie, de manière inclinée au moins selon la troisième direction (Y) et les seconds moyens de guidage (36 ; 122 ; 38 ; 123) du moyen de grimpe (110) comprennent au moins un deuxième organe d'appui (122), le deuxième organe d'appui (122) étant configuré pour se déplacer le long de la deuxième face de guidage (36) entre une position initiale et une position finale (PF) lors du déplacement d'engagement (DE) du moyen de grimpe (110), la position finale (PF) du deuxième organe d'appui (122) sur la deuxième face d'appui étant déterminée pour coïncider avec la position engagée (PE) de la roue dentée (112).

11. Ensemble selon la revendication précédente, dans lequel les seconds moyens de guidage (36 ; 122 ; 38 ; 123) du montant (20) comprennent au moins une troisième face de guidage (38) s'étendant selon la deuxième direction (X), en tout ou partie, de manière inclinée au moins selon la troisième direction (Y), la deuxième face de guidage (36) et la troisième face de guidage (38) présentant des inclinaisons respectives opposées l'une de l'autre selon la troisième direction (Y), et dans lequel les seconds moyens de guidage (36 ; 122 ; 38 ; 123) du moyen de grimpe (110) comprennent au moins un troisième organe d'appui (123), le troisième organe d'appui (123) étant configuré pour se déplacer le long de la troisième face de guidage (38) entre une position initiale et une position finale (PF) lors du déplacement d'engagement (DE) du moyen de grimpe (110), la position finale (PF) du troisième organe d'appui (123) sur la troisième face d'appui étant déterminée pour coïncider avec la position engagée (PE) de la roue dentée (112).

12. Ensemble selon l'une quelconque des revendications précédentes, lequel comprenant un véhicule (100), de préférence pour système automatisé de stockage et de récupération, le véhicule (100) comprenant un châssis (101) et ledit au moins un moyen de grimpe (110), ledit au moins un moyen de grimpe (110) étant mobile par rapport au châssis (101) entre une position escamotée et une position déployée dans laquelle la roue dentée (112) est dans la position engagée (PE).

13. Ensemble selon la revendication précédente, dans lequel le montant (20) est fixé au sol et dans lequel le véhicule (100) comprend des moyens de roulage (140), les moyens de roulage (140) étant en contact avec le sol lorsque ledit au moins un moyen de grimpe (110) est dans sa position escamotée, pour permettre au véhicule (100) de se déplacer au sol, et à distance du sol lorsque ledit au moins un moyen de grimpe (110) est dans sa position déployée.

14. Ensemble selon la revendication 12, dans lequel le montant (20) est fixé au sol et dans lequel le véhicule (100) comprend des moyens de roulage (140), ledit au moins un moyen de grimpe (110) étant relié au châssis (101) du véhicule (100) par un mécanisme de déploiement (130) présentant un degré de mobilité selon la première direction (Z) de sorte que les moyens de roulage (140) sont en contact avec le sol à la fois lorsque ledit au moins un moyen de grimpe (110) est dans sa position escamotée et dans sa position déployée.

15. Procédé d'engagement d'au moins un moyen de grimpe (110) avec au moins un montant (20) pour rack (10) de stockage, ledit montant (20) s'étendant selon une première direction (Z) et comprenant une crémaillère (22) qui comporte des premières dents (24) saillantes selon une deuxième direction (X) perpendiculaire à la première direction (Z), ledit moyen de grimpe (110) étant destiné à un véhicule (100) apte à se déplacer le long du montant (20) selon la première direction (Z), le moyen de grimpe (110) comprenant une roue dentée (112) qui présente un axe de rotation (A) et qui comprend, à sa périphérie, des deuxièmes dents (114) saillantes radialement par rapport à l'axe de rotation (A), les deuxièmes dents (114) de la roue dentée (112) étant adaptées pour engrener avec les premières dents (24) de la crémaillère (22),
le procédé comprenant un déplacement d'engagement (DE) du moyen de grimpe (110) vers le montant (20) selon la deuxième direction (X), avec l'axe de rotation (A) de la roue dentée (112) perpendiculaire à la première direction (Z) et à la deuxième direction (X), au cours duquel des premiers moyens de guidage (34 ; 121) coopèrent l'un avec l'autre afin de guider la roue dentée (112) du moyen de grimpe (110) selon la première direction (Z) jusque dans une position engagée (PE) dans laquelle les deuxièmes dents (114) de la roue dentée (112) engrènent avec les premières dents (24) de la crémaillère (22).
